# EUROPEAN PATENT SPECIFICATION

(11) **EP 2 021 893 B1**
(45) Date of publication and mention of the grant of the patent: **14.10.2009**
(21) Application number: 07732352.5
(22) Date of filing: 10.04.2007
(51) Int. Cl.: G05D 23/13, E03C 1/04

(54) **AUTOMATIC BATHTUB FILLER**
AUTOMATISCHE BADEWANNENFÜLLVORRICHTUNG
REMPLISSEUSE DE BAIGNOIRE AUTOMATIQUE

(30) Priority: 17.05.2006 GB 0609788
(43) Date of publication of application: 11.02.2009
(73) Proprietor: Vassilev, Plamen Spassov, London SE14 5RT (GB)
(72) Inventor: Vassilev, Plamen Spassov, London SE14 5RT (GB)
(74) Representative: Hammler, Martin Franz
(86) International application number: PCT/GB2007/001308
(87) International publication number: WO 2007/132143

(56) References cited:
- WO-A-95/02737
- GB-A- 2 174 219
- US-A- 3 391 411
- US-B1- 6 823 539

## Description

### Field of the Invention

This invention concerns control systems and apparatus for automatically filling bathtubs.

### Background of the Invention

Bathtubs are usually filled by manually inserting a plug in the drain or plughole (this includes closing "pop-up" waste valves) and turning the hot and cold taps on. To fill a bathtub in this traditional way takes time and often the result is a bathtub not filled to the desired level and temperature. Adjusting water level and temperature to the final stage involves the undivided attention of the user and errors and inattention often necessitate releasing some water into the drain. A person taking a bath daily is wasting many hours a year filling and adjusting the water temperature and level. Another aspect of the problem of manual or semi-automatic filling of bathtubs is that water and energy are wasted. There are devices of varying complexity on the market that have attempted to provide a solution to this problem but these often spoil the appearance of the bath. Some of these devices time the periods for which the hot and cold supplies are on without compensating for water pressure and temperature fluctuation. Closing the plug is often left to the person filling the bathtub and sometimes this is simply forgotten, pouring into the drain a bath full of water or more and hence the energy needed to heat it, not to mention that this wastage may have used up most of the available hot water, precluding successful bath filling immediately afterwards. Another serious problem is overfilling of bathtubs when the overflow is insufficient to take the excess water into the drain. When this happens flooding can cause extensive damage and very high insurance claims. Manual filling can present the danger of scalding, too.

DE10031665 shows apparatus for automatically filling a bathtub, including mechanically interlinked automatically controlled inlet valves on both the hot and cold water supply pipes. The apparatus allows blending of the filling water to achieve a desired temperature. The filling level is controlled by a pressure sensor in the base of the bathtub or by a turbine flow meter which measures the total water inflow. The bath outlet is provided with a servo-operated poppet valve. The disclosed system is therefore capable of automatically closing the outlet valve and filling the tub to a desired level with water at a predetermined elevated temperature. When bathing has finished, the tub can be emptied again through the servo-operated outlet valve. However the system as disclosed is incapable of maintaining the water in the tub at the desired temperature for extended periods. Also, the monitoring sensor needs to be mounted in an aperture cut into the tub, spoiling the appearance of the tub and providing a further potential leak path. Also, this location does not compensate for localised cooling of the water from heat losses through the bath, resulting in the bath being filled with warmer or colder water than anticipated.

GB2174219 discloses a bath having an automated hot and cold water inlet mixer valve and an automated outlet for waste water. A control system senses the level and temperature of the water in the bath during filling and regulates the mixer valve to achieve a user-specified depth and temperature at a point when the mixer valve is closed. The user can also adjust the water temperature during bathing by activating the control system to add hot or cold water. When the level of water in the bath becomes excessive, the control system opens the waste valve until the surplus water has been drained off. The bath is also provided with a water recirculation pipe connected to an intake in the side of the bath and having an outlet end connected to a pump and conventional Jacuzzi jets. The recirculation pipe is provided with a through flow water heater which can be used to maintain the water at a pre-set temperature once the bath has been filled. For installation, this system therefore requires several further apertures or other penetrations through the side of the bath than are conventionally needed, with attendant disadvantages as above.

JP2002-206802 concerns a bath filling control system in which filling and recirculation of bath water takes place in some embodiments through a recirculation adapter which forms a part of a drain fitting for the bath. The fitting is relatively complex in construction and the recirculation passages provided are of restricted cross-section due to space constraints.

GB2424367 relates to an automated bath in which water from the bath may be filtered, heated and recirculated back into the bath via a three-way mixer.

### Summary of the Invention

The present invention addresses these problems by providing a system for automatically filling a bathtub, the system being operatively arranged to supply heated water to the bathtub and to drain water from the bathtub through a drain outlet after use, the system comprising a recirculation conduit through which water from the drain outlet is recirculated back to the bathtub in use, wherein the recirculation conduit is connected to a filling inlet that is combined with an overflow outlet for the bathtub or formed as a spout mounted on an adjacent wall or ceiling area characterised in that an external water supply (50, 54, 56) for filling the bath is connected to the filling inlet (18).. This helps to maintain an even temperature throughout the water in the bathtub, without requiring additional apertures or penetrations through the side of the bathtub.

An external water supply for filling the bath may be connected to an inlet combined with the drain outlet. The usual taps and tap hole(s) can then be eliminated, giving the bath a clean and uncluttered appearance.

The system may be operatively arranged to fill the bathtub to a predetermined depth. Thereafter, to maintain the water at a predetermined temperature, the system may be arranged to automatically add heated water to the bath from the external filling supply. A quantity of water may also be released through the drainage outlet to a drain so as either to maintain the depth of water at the predetermined depth, or to maintain the depth of water below a maximum depth.

Alternatively, after filling the bathtub to the predetermined depth, to maintain the predetermined water temperature in the bath, the system may be arranged to automatically add heated water to the bath through the recirculation conduit. For this purpose, the recirculation conduit may be provided with a water heater.

The system may comprise a main inlet and an auxiliary inlet, to one, the other or both of which the heated water may be selectively supplied. For example, the main inlet may be combined with one or more of a separate filling inlet, a combined filling inlet/drain outlet and a combined filling inlet/overflow outlet, and the auxiliary inlet may be connected to a shower head, body jets or the like.

The control system may be programmable to fill the bath at a predetermined time. It may be programmable for this or any other purpose either by local control, such as a directly connected keypad or the like. Additionally or alternatively, the control system may be remotely programmable, for example from a "wireless" handset using an infrared, ultrasonic or radio link. Remote programming may also be via a LAN, home automation network, the internet, the public telephone system, broadband cable or the like.

The invention also provides a bathtub overflow fitting comprising a first inlet connected in use to an external supply of filling water and directing this filling water into the bathtub in use, the overflow fitting comprising a further inlet connected in use to a recirculation conduit and directing water from the recirculation conduit into the bathtub.

The invention in its various aspects is applicable not only to bathtubs for installation in domestic bathrooms, but to similar sanitary appliances such as sinks and washbasins, spa baths, hydrotherapy pools, whirlpool baths ("Jauzzi"® baths), foot baths and the like. The term "bathtub" as used in this specification should be construed accordingly.

Further preferred features and advantages of the invention will be apparent from the following description of illustrative embodiments, made with reference to the drawings.

### Brief Description of the Drawings

Figure 1 is a diagram of a bathtub filling control system embodying the invention;
Figures 2a, 2b and 2c show modifications of the system of Figure 1;
Figure 3 is a cross-sectional view of a drain outlet assembly for use in the control system of Figures 1 and 2a - c;
Figures 4 and 5 are cross-sectional views taken on line A - A in Figure 3, showing a poppet valve in open and closed positions respectively;
Figure 6 is a cross-sectional view taken on line B - B in Figure 4;
Figure 7a is a diagrammatic representation of a bathtub filling control system embodying the further aspect of the invention, in which the inlet to and the outlet from the circulation pump are both from the drain assembly;
Figure 7b is similar to Figure 7a, but with the conventional overflow eliminated, and
Figures 8 and 9 show modifications to the drain outlet assembly and poppet valve, for use with the systems of Figures 7a and 7b, Figure 9 being a section on line C-C in Figure 8.

### Description of the Preferred Embodiments

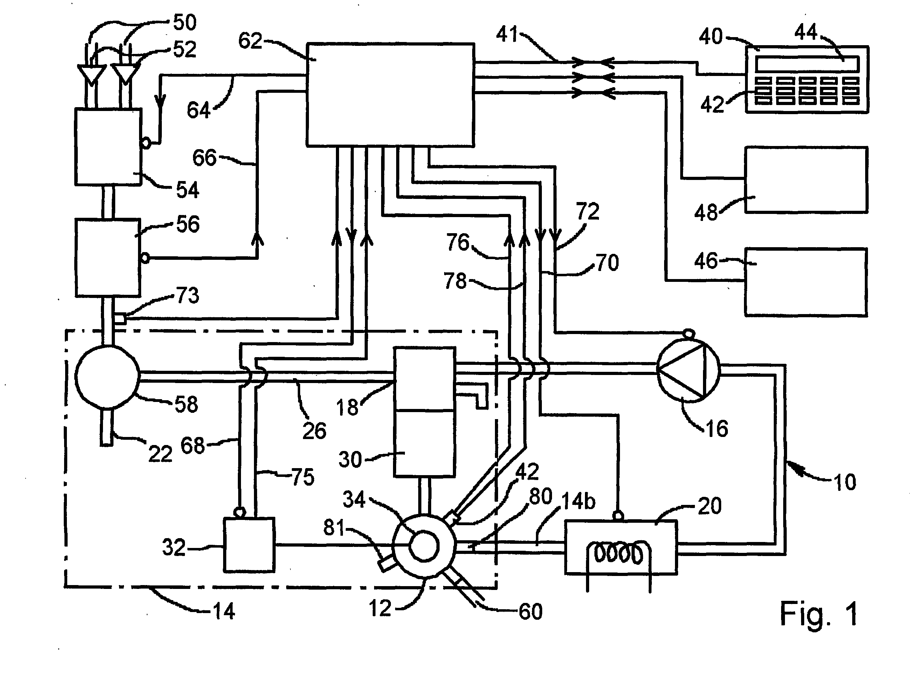

This invention relates to a system 10 and apparatus for facilitating the control, preferably including remote control, of a bathtub, advantageously for enhanced comfort and optimal use of energy and water. In a preferred embodiment, the system 10 at a command closes the drain 12 of a bathtub 14 and fills it with water to a user-defined depth and temperature. In the embodiment illustrated in Figure 1, a circulation pump 16 moves the water from the drainage outlet of the bathtub (upstream of a motorised poppet valve 34 which selectively closes off a drainage outlet pipe 60) back into the bath through an inlet 18 during filling, at intervals or continuously, so ensuring temperature losses from the water in the bathtub are compensated for by the temperature of the filling water. This water is evenly mixed with water already in the bathtub to give a more uniform temperature. The inlet 18 may be combined with an overflow 30 connected to the drain outlet 12 in the usual way. When the bathtub 14 is filled and left to stand, the system 10 could either maintain the temperature and level of the water by releasing water into the drain 12 and then filling with more water, or circulating water via an optional heater/cooler 20 from the drain 12 and back into the bathtub 14 through the inlet 18. The system 10 can be controlled with a simple hand-held remote controller, a wall- or similarly-mounted console 40 with a keypad 42 and an LCD or similar numeric display 44, and/or via the Internet, telephone network, a LAN, a home automation system or any other suitable way as desired, for example using the RS232/RS484 and/or TCP/IP interfaces 46, 48 illustrated.

Hot and cold external water supply pipes 50 are connected to a motorised blending valve 54 via non-return valves 52. Water blended to a desired temperature is supplied from the valve 54 to a volume (flow rate) or simple on/off motorised control valve 56. The outlet from the flow control valve 56 is connected to the inlet of a manually operated or motorised diverter valve 58. This may be of the known kind having a main and an auxiliary outlet, the inlet being connected to the main outlet in the default no-flow condition, and the inlet remaining connected to whichever of the main and auxiliary outlets is set in the flow condition. The main outlet 26 of the diverter valve 58 is connected to the bath filling inlet 18. One or more auxiliary water inlets 22 are connected to the auxiliary outlet of the diverter valve 58 and are provided for connection to a shower head, body jets or for many other uses.

An electronic control unit 62 has control outputs 64, 66, 68, 70, 72 respectively connected to the blending valve 54, the flow control valve 56, an actuator 32 for the motorised poppet valve 34, the heater 20 and the circulation pump 16. The control unit has inputs 74, 76, 78 respectively from a temperature sensor 73 mounted in or on the conduit connecting the valves 56, 58, and from a combined pressure and temperature sensor 42 in the drain 12 upstream of the poppet valve 34. There is also an input 75 signalling the position of the actuator 32, and hence whether or not the poppet valve 34 is closed. The control unit may be programmable from the console 40 or interfaces 46, 48 to fill the bath to a specified depth and temperature, either immediately or at a specified future time. The temperature and water depth may also be adjusted from the console 40 or interfaces 46, 48 after the initial bath filling cycle is completed. The control unit 62 may be programmed to maintain the water depth at the specified depth and temperature, either by circulating water through the heater 20, or by from time to time opening the poppet valve 34 to release water into the drainage outlet 60 and topping up the bath 14 with hot water from the blending valve 52. The heater 20 is therefore optional. Both the heater 20 and the circulation pump can be deactivated and the poppet valve 34 can be opened to drain the bath 14, using the control panel 40 or interfaces 46, 48.

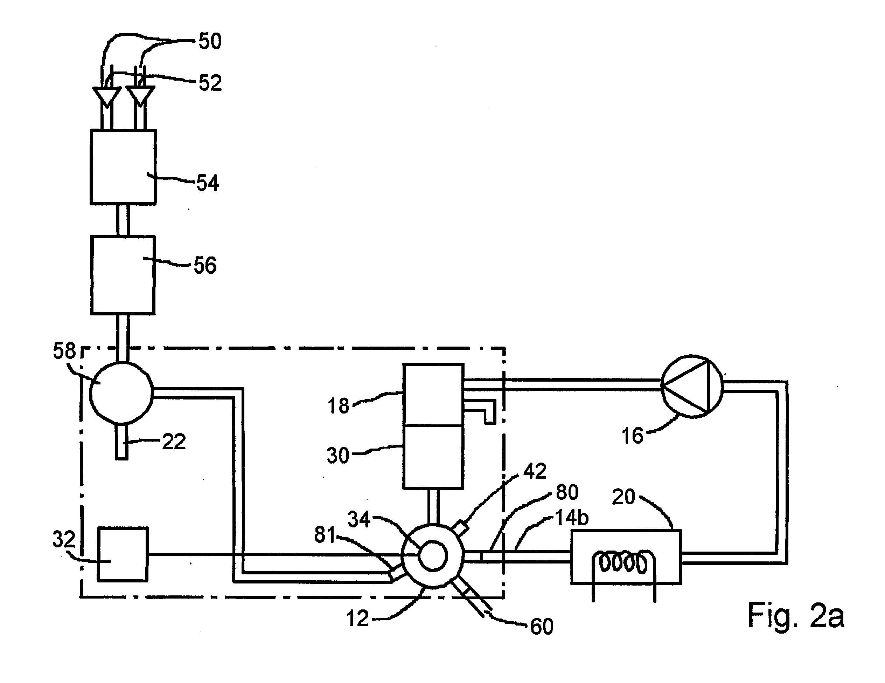

The bathtub filling from the external water supply if desired could be done from the "waste" or drain 12, creating more unusual feel and reducing the noise associated with filling to almost silent filling. This filling arrangement is shown in Figure 2a, in which instead of being connected to the bath inlet/overflow 18/30, the main outlet 26 from the diverter valve 58 is connected to the bath drain outlet 12, upstream of the poppet valve 34. With this arrangement, the overflow 30/inlet 18 is nevertheless still used as the inlet for returning the water recirculated to the bathtub, so as to maintain an even water temperature within the bathtub 14. This system and apparatus with minor variations fits most bathtubs without any modifications to the bathtubs or spoiling of their appearance. No extra apertures need be cut through the bathtub to accommodate the system connections and components.

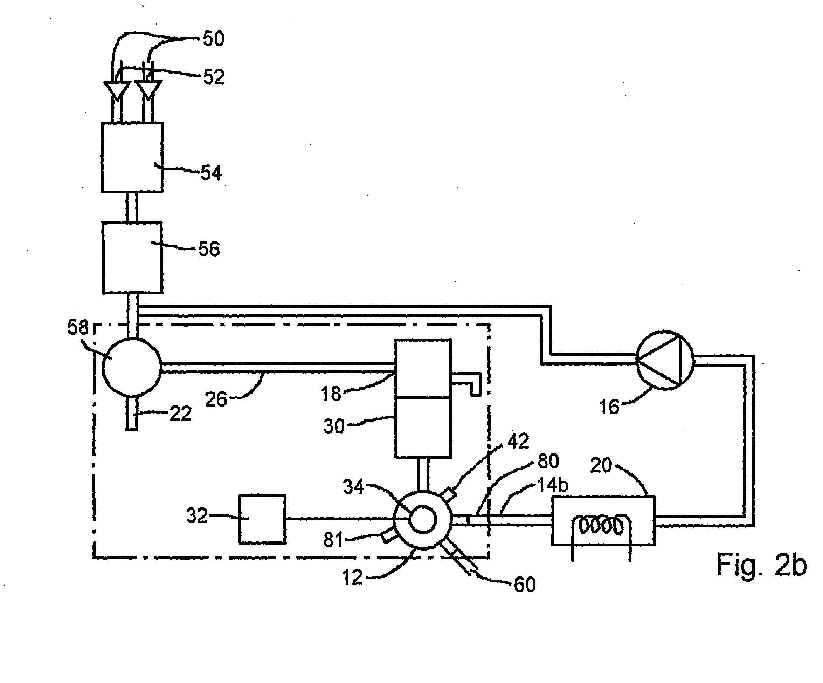

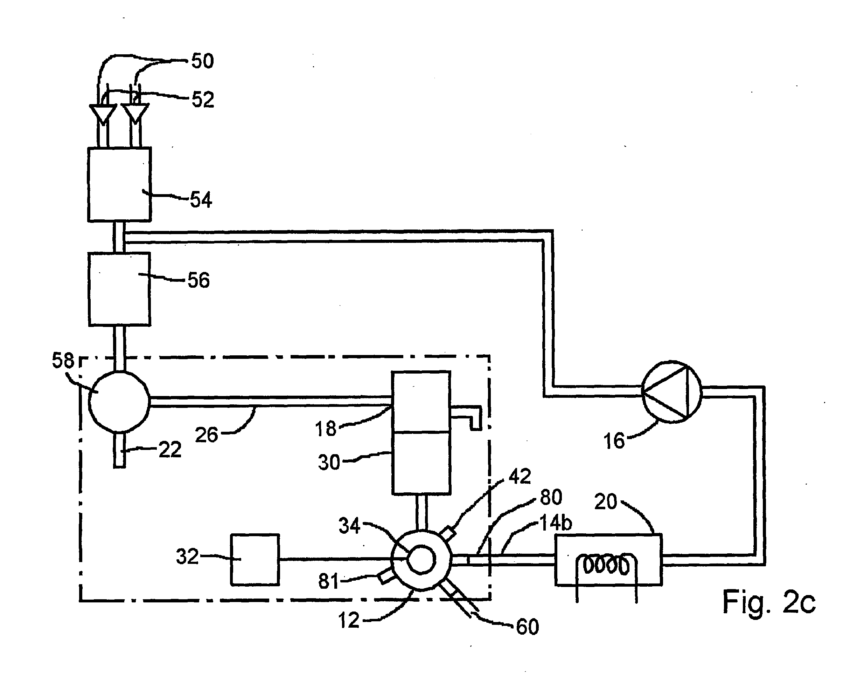

Figures 2b and 2c show further variants in which the output from the circulation pump 16 is connected to the conduit interconnecting the flow control and diverter valves 56, 58, or to the conduit interconnecting the blending and flow control valves 54, 56. In Figures 2a - 2c, the control unit 62, interfaces 40, 46, 48 and their electrical connections are omitted for clarity, but will be similar to those shown in Figure 1.

As shown, the system may comprise four main apparatus components controllable by a variety of suitable controllers/interfaces including but not limited to TCP/IP (Ethernet), RS232/RS484 or a basic LCD interface with push buttons. The main components are as follows

### I. Drain Assembly

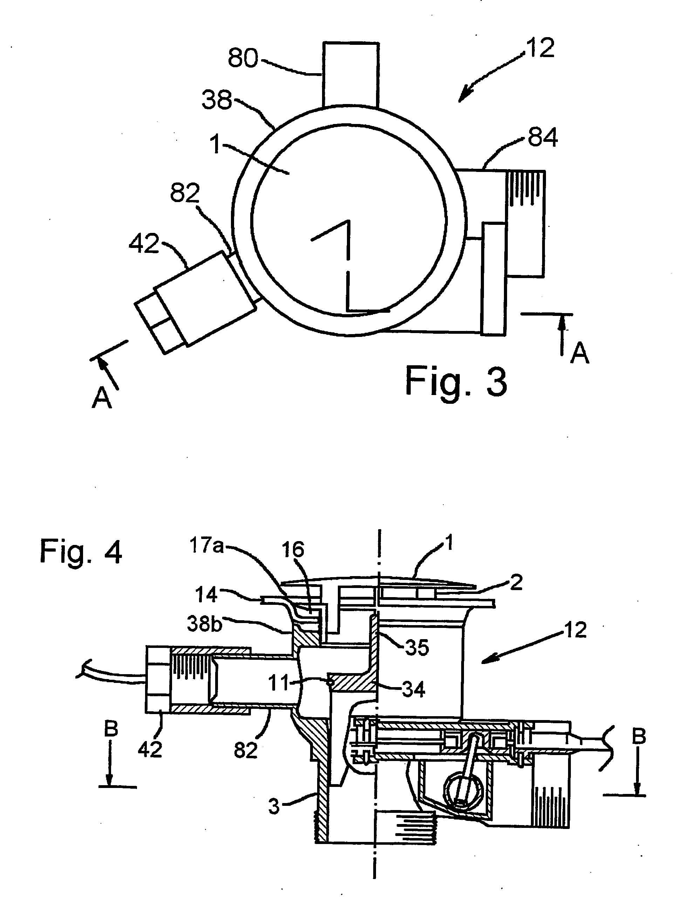

The drain assembly 12 comprises the device 32 for motorised actuation of the poppet valve 34, the assembly having a circulation/monitoring chamber 38 containing an outlet 80 for feeding of the circulation pump 16 and a connection 82 for accommodating a combined temperature and pressure sensor 42. Alternatively, these sensors may be separate. A connection 84 for the overflow outlet 30 is present below the point of operation of the poppet valve 34 allowing unobstructed flow of water to discharge into the drainage pipe 60.
The drain assembly is shown in more detail in Figures 3 to 6, and comprises the following parts:

| Item No. Description | |
|---|---|
| 1 | domed drain outlet cover |
| 2 | outlet cover support arms |
| 14 | bath tub |
| 3 | tubular valve housing |
| 4 | Bowden cable connecting to linear actuator 32 |
| 5 | slider |
| 6 | Bowden cable connecting to poppet valve manual override, e.g. a knob mounted in front of the overflow outlet 30 in known manner |
| 7 | guide tube |
| 8 | arm |
| 9 | actuating lever |
| 34 | poppet valve |
| 11 | sealing ring |
| 12a | sensor wires and pressure sensor balancing tube |
| 42 | combined pressure and temperature sensor |
| 80 | circulation outlet |
| 15, 16a | gaskets |
| 17 | externally threaded sleeve |

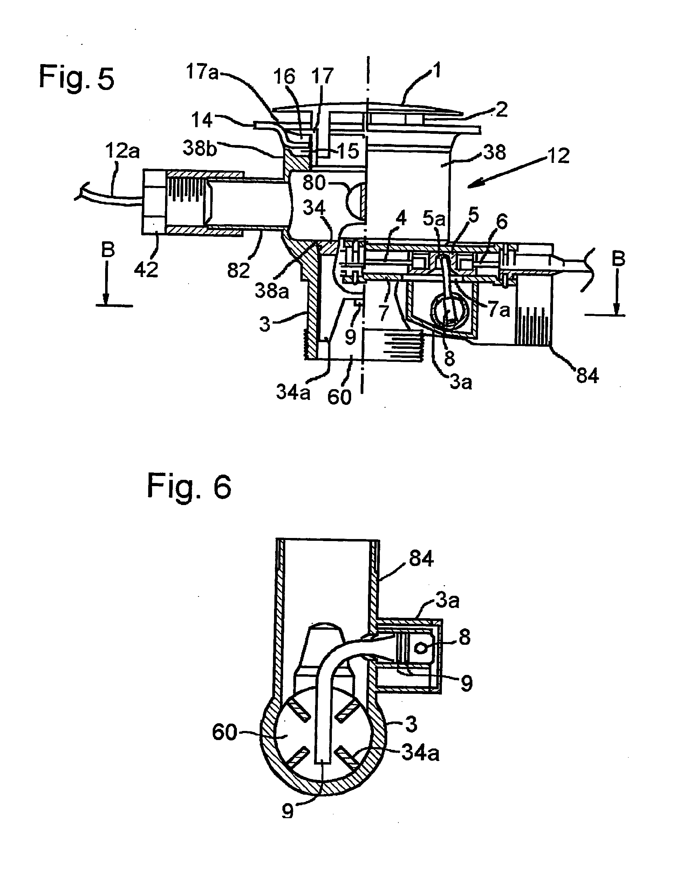

The poppet valve 34 closes against a seat 38a formed in the bottom of the circulation/monitoring chamber 38 and seals against this seat by means of sealing ring 11. The poppet valve 34 is guided for linear sliding movement in the tubular valve housing 3 by four depending legs 34a which are a close sliding fit in the drainage outlet pipe 60. The guide tube 7 is arranged parallel to the overflow inlet connection 84 and accommodates the slider 5. The actuating lever 9 is bent as seen most clearly in Figure 6 and has a first end engaged beneath the poppet valve 34, between the legs 34a. A second end of the lever 9 is journalled in a bore formed in a boss 3a attached to the overflow connection 84. The second end of the lever 9 is sealed in the bore by O rings 9a. The arm 8 is fixed to extend transversely of the second end of the lever 9, upwardly into the guide tube 7 through a slot 7a. The upper end of the arm 8 engages in a recess 5a in the slider 5. Linear movement of the slider 5 in the guide tube 7 under the action of the Bowden cables 4 or 6 therefore causes the arm 8 to pivot the second end of the lever 9 in the bore in the boss 3a, and hence causes the first end of the lever to move up and down, opening or closing the poppet valve 34 against the seat 38a. The circulation outlet 80 and sensor connection 82 are in fluid communication with the circulation/monitoring chamber 38 above the seat 38a; whereas the drainage outlet pipe 60 and overflow connection 84 are below the seat 38a.

Where the bath is to be filled from the external water supply via the drain assembly 12 as in Figure 2a, the motorised blending valve 54 having inlets connected to hot and cold external water supplies 50 via non-return valves 54, together with the flow control valve 56 and diverter valve 58, have their main outlet 26 connected to the circulation/monitoring chamber 38 or to the circulation outlet 80, or to the circulation conduit 14b connected to that outlet.

The circulation/monitoring chamber 38 has an internally threaded upper rim 38b for reception of the externally threaded sleeve 17. The usual drainage aperture is formed at the lowest point of the bath 14 and the rim of this aperture is clamped between the gaskets 15, 16a sandwiched between an upper flange 17a on the sleeve 17 and the upper rim 38b of the circulation/monitoring chamber 38. The drain outlet cover 1 is supported on the sleeve 17 by the arms 2. The rim of the cover 1 is spaced above the flange 17a to define an annular gap allowing fluid communication between the interior of the bath 14 and the circulation/monitoring chamber 38. The entire drain assembly, apart from the cover 1, flange 17a and gasket 16, is thus sealingly suspended beneath the usual drainage aperture in the bath 14. The cover 1 is readily removable for cleaning purposes. The poppet valve 34 is provided with a stem 35 which can be grasped for removal of the valve 34 from the body 30 through the chamber 38, for cleaning purposes.

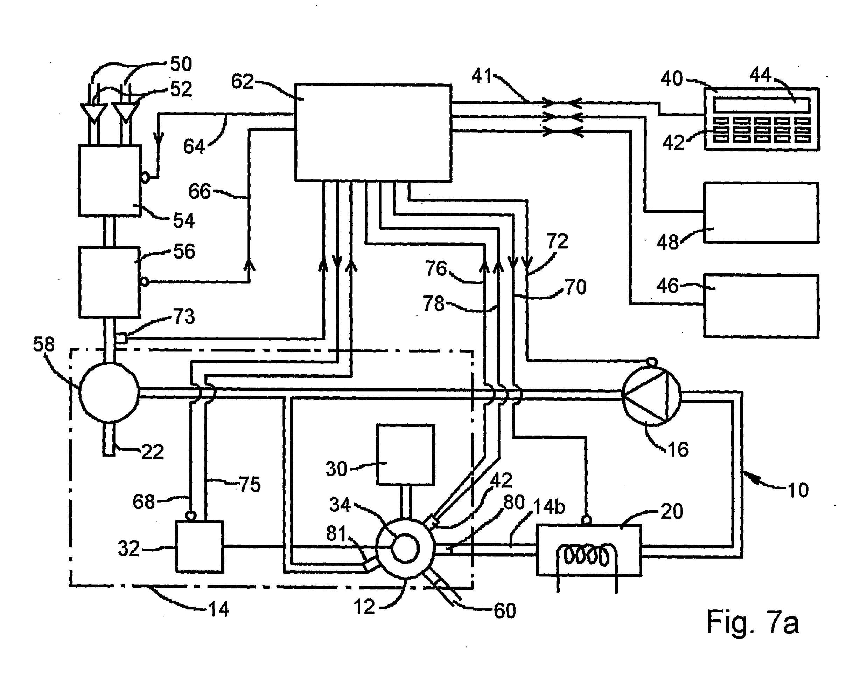

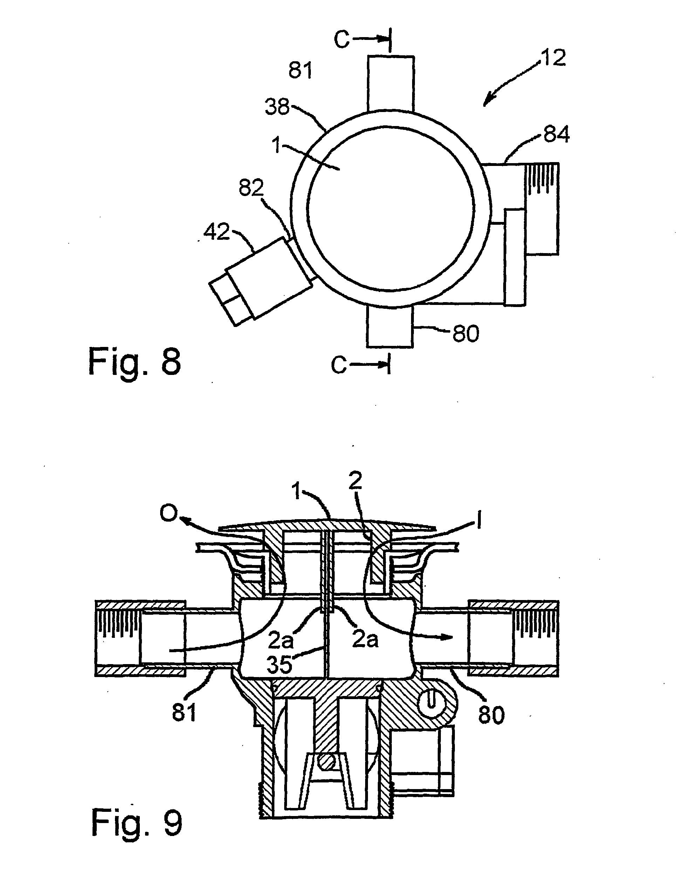

A further bathtub filling, emptying and water recirculation system and associated control circuitry is shown in Figure 7a. Here the inlet to and outlet from the circulation pump 16 are both from the drain assembly 12. The required modification to the drain assembly and poppet valve are described in further detail below, with reference to Figures 8 and 9. The required control circuitry, including the controllers and interfaces that may be used, may be substantially identical to that described and shown with reference to Figure 1. For brevity such description is not repeated here.

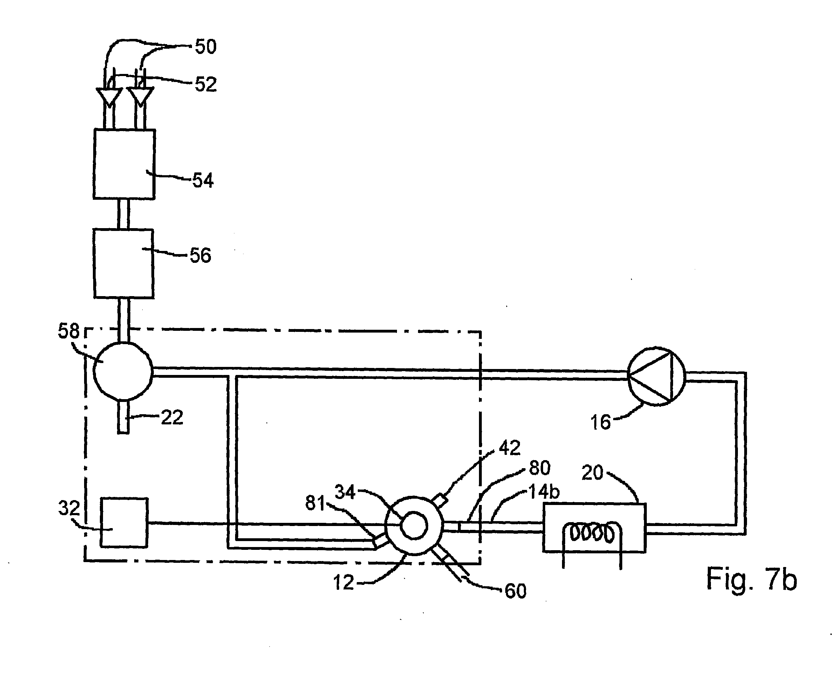

A still further system shown in Figure 7b is similar to that of Figure 7a except that the overflow 30 is eliminated. Instead either electronic (e.g. pressure sensor) water level monitoring is used alone, or a "hidden" overflow is used, of the kind described in US5121509, or similar. In Figure 7b, the control unit 62, interfaces 40, 46, 48 and their electrical connections are omitted for simplicity, but will be similar to those shown in Figures 1 and 7a.

Figure 8 shows a modified form of the drain assembly 12 for use with the systems shown in Figures 7a and 7b, in which the circulation/monitoring chamber 38 is not only provided with the circulation outlet 80 connected to the pump inlet, through which water is removed from the bathtub 14 via the drain assembly 12, but also an inlet 81 that may be connected to the pump outlet for returning the circulated water back into the bathtub via the circulation/monitoring chamber 38. As shown in Figure 9, with this arrangement, two of the cover support arms 2 shown in Figure 4 are replaced by a depending double transverse baffle 2a. The poppet valve stem 34 is replaced by an upwardly extending transverse baffle 35 an upper end of which engages snugly between the two lowermost parts of the double transverse baffle 2a. This still allows vertical sliding movement of the poppet valve relative to the drain assembly body and cover. The interengaging baffles divide the circulation/monitoring chamber into two parts: one in fluid communication with the circulation outlet 80 and the other in fluid communication with the inlet 81. The inlet and outlet flows to and from the bathtub via the drain assembly 12 are represented by the arrows I, O respectively. As these flows take place through opposite sides of the annulus defined between the base of the bathtub 14 and the cover 1, substantial mixing of the bath water will take place, despite the fact that water flows are all to or from the drain assembly 12. This is so even if some water is permitted to "leak" around the edges of the baffles 2a, 35. The guide tube and slider are also shown in Figure 9, appearing in transverse section, to the right of the poppet valve.

### II. Inlet/Overflow

As one option, the overflow device provides a recirculation inlet into the bathtub, used in some instances for filling the bathtub as well as for water recirculation. The device may incorporate filler inlet 18, bathtub overflow 30 and a lever or knob for manual actuation of the poppet valve 34. This is a remote manual waste actuator, e.g. a control knob at the overflow inlet, connected to the poppet valve 34 via the Bowden cable 6. The two inlets 50 connected to hot and cold external water supplies via the non return valves 52 are optionally connected to the filler inlet 18 as shown in Figure 1. The device 54 for motorised blending of water and the device 56 for flow control (if not connected to the drain assembly 12 as described above) optionally fills the bathtub from these inlets while the circulation pump 16 taking water from the circulation/monitoring chamber 38 via the circulation conduit 14b is also connected to the filler inlet 18 (if not connected to a combined recirculation and drainage fitting as described above, particularly with reference to Figures 8 and 9). The circulation pump output and the blending valve output may be connected to the filler inlet 18 via one outlet of the manual or motorised diverter valve 58. The other outlet of the diverter valve may be connected to an auxiliary water inlet 22 for the bathtub, such as a shower head, body jet nozzles or the like. The circulation circuit is in place to move water around the bathtub from the circulation/monitoring chamber 38 to the filler inlet 18 and/or the auxiliary inlet(s) 22, (and/or a drainage fitting inlet branch 81, if present) while filling is in progress, facilitating an accurate temperature reading for the bathtub water from the temperature sensor 42. Circulation at a time interval predetermined by the controller 62 ensures accurate monitoring of temperature by the controller. When bathtub water is left for some time, temperature can be adjusted by discharging some water via the motorised poppet valve 34 and adding some more water at suitable temperature. When the bathtub is filled and left for some time the controller 62 with the means of circulation through the device for heating or cooling 20 can maintain the predefined temperature without discharging water.

The combined filler inlet 18/overflow 30 assembly may be as described in US6823539. Alternatively a separate spout mounted to a convenient adjacent surface such as a wall or ceiling may be used to fill the bathtub and/or return recirculated water to the bathtub.

### III. Filling Control Valves

These are provided by the device for motorised blending of water and flow control, as mentioned above. This comprises a valve assembly having thermostatic 54 and volume 56 valves with motors and the temperature sensor 73. Hot and cold water incoming via the check valves 52 is blended to the correct predetermined temperature by the motorised thermostatic valve 54. The motorised volume control valve 56 controls the water flow from completely closed status to fully open. The main function of this valve is as an ON/OFF valve in relation to the bathtub filing. The volume control function is used in conjunction with the circulation pump and/or when a hand shower is connected to the auxiliary filling inlet 22.

### IV. System Control Unit

The control unit 62 for the devices as mentioned above, may have a basic interface 40 having a keypad and LCD or other visual display as described above, and/or other data interfaces such as 40, 46 described above. The user chooses a bathtub filling depth and temperature setting via preset buttons or as user defined values via a numeric keypad. The flow rate for the auxiliary output is set and the user confirms the choice by selecting ON.

For bathtub filling, initialisation starts by establishing that the bathtub is empty. The actuator 32 of the poppet valve 34 is energised and when the poppet valve is closed filling commences. The volume control valve 56 fully opens and blending of water starts at the user predefined temperature monitored by temperature sensor 42 until sufficient quantity of water is discharged into the bathtub (preset, but programmable) for the circulation pump 16 to start working. With the circulation pump in operation the temperature reading from temperature sensor 42 is compared with the user predefined temperature and temperature sensor 73 limits the temperature at the blending valve 54 not to exceed the predefined maximum temperature to prevent scalding. The pressure sensor 42, which utilises technology that compensates for ambient pressure variations, facilitates the water level monitoring and when the desired level is achieved the volume control valve 56 is turned off. Temperature sensor 42 and the pressure sensor 42 can be combined or housed in the same housing for ease of servicing. Bathtub filling can be interrupted at any time by selecting OFF (manual shutdown override).

For use of the auxiliary inlet 22 (e.g. hand shower), the volume control valve 56 opens and blending of water starts at the user predefined volume and temperature, monitored by temperature sensor 73.

The basic LCD interface 40 is intended to be located within reach of the bather. An additional remote basic LCD interface without the auxiliary (hand shower) functions could be located on a nearby wall. The interface 40 may be configured as a waterproofed battery operated remote handset, the communication channel 41 with the control unit 62 being provided via an infrared, radio or ultrasonic link. The link 41 is preferably bidirectional as shown, so that system status information is available at the interface 40, but in simplified form the link may be unidirectional, for supplying commands to the control unit 62 only.

Communication to the controller via TCP/IP protocol allows remote operation and full control from a mobile device or Internet/Intranet with a customisable user interface. Communication to the controller via RS232/RS484 protocol allows integration with home automation systems. Other connectivity options are possible.

By using circulation and temperature monitoring at the circulation/monitoring chamber 38 at the bottom of the bathtub via temperature sensor 42, accurate bathtub water temperature measurement and control is achieved. This method for monitoring the water temperature compensates for the heat loss to ambient before filling, during filling and during bathing.

The bath filling inlet 18 need not be combined with the overflow outlet 30, but could instead be in the form of a spout mounted e.g. on an adjacent wall or ceiling area.

## Claims

1. A system (10) for automatically filling a bathtub (14), the system being operatively arranged to supply heated water to the bathtub, and to drain water from the bathtub through a drain outlet (12) after use, the system comprising a recirculation conduit through which water from the drain outlet is recirculated back to the bathtub in use, wherein the recirculation conduit is connected to a filling inlet (18) that is combined with an overflow outlet (30) for the bathtub or formed as a spout mounted on an adjacent wall or ceiling area **characterised in that** an external water supply (50, 54, 56) for filling the bath is connected to the filling inlet (18).

2. A system (10) as defined in claim 1 and operatively arranged to fill the bathtub (14) to a predetermined depth.

3. A system (10) as defined in claim 1 in which, to maintain the water at a predetermined temperature, a control system (62) is arranged to automatically add heated water to the bath from the external water supply (50, 54, 56).

4. A system (10) as defined in claim 3, in which water is released through the drain outlet (12) to a drain so as to maintain the depth of water at the predetermined depth.

5. A system (10) as defined in claim 3 , in which water is released through the drain outlet (12) to a drain so as to maintain the depth of water below a maximum depth.

6. A system (10) as defined in any preceding claim in which after filling the bathtub to the predetermined depth, to maintain the predetermined water temperature in the bath, a control system (62) is arranged to automatically add heated water to the bath through the recirculation conduit.

7. A system (10) as defined in claim 6, in which the recirculation conduit is provided with a water heater (20).

8. A system (10) as defined in any preceding claim comprising a main inlet (18) and an auxiliary inlet (22), to one, the other or both of which the heated water may be selectively supplied.

9. A system (10) as defined in claim 8, in which the main inlet (18) comprises one or more of a separate filling inlet, a combined filling inlet/drain outlet (81/12) and a combined filling inlet/overflow outlet (18/30).

10. A system as defined in claim 8 or 9, in which the auxiliary inlet (22) comprises one or more of a shower head, body jets or another inlet.

11. A system (10) as defined in any preceding claim, which is programmable to fill the bathtub (12) at a predetermined time.

12. A system (10) as defined in any preceding claim, which is programmable by local control.

13. A system (10) as defined in any preceding claim, which is remotely programmable.

14. A bathtub overflow fitting (30) comprising a first inlet (18) connected in use to an external supply of filling water and directing this filling water into a bathtub (14) in use, the overflow fitting comprising a further inlet connected in use to a recirculation conduit and directing water from the recirculation conduit into the bathtub.

## Patentansprüche

1. Ein System (10) zum automatischen Füllen einer Badewanne (14), wobei das System so eingerichtet ist, dass es die Badewanne mit erwärmtem Wasser versorgt, und nach der Benutzung Wasser aus der Badewanne durch eine Abflussöffnung (12) ablässt, wobei das System einen Rückführungskreislauf aufweist, durch den Wasser von der Abflussöffnung in die in Verwendung befindliche Badewanne rückgeführt wird, wobei der Rückführungskreislauf mit einem Fülleinlass (18) verbunden ist, der mit einem Überlaufauslass (30) für die Badewanne verbunden ist oder als Wasserauslass ausgebildet ist, der an einem benachbarten Wand- oder Deckenbereich angebracht ist, **dadurch gekennzeichnet, dass** eine externe Wasserversorgung (50, 54, 56) zum Einlassen des Bades mit dem Fülleinlass (18) verbunden ist.

2. Ein System (10) gemäß Anspruch 1, das so eingerichtet ist, dass es die Badewanne (14) bis zu einer vorbestimmten Höhe füllt.

3. Ein System (10) gemäß Anspruch 1, bei dem ein Steuersystem (62) angeordnet ist, um erhitztes Wasser aus der externen Wasserversorgung (50, 54, 56) automatisch in das Bad zu führen, um das Wasser bei einer vorbestimmten Temperatur zu halten.

4. Ein System (10) gemäß Anspruch 3, bei dem Wasser durch die Abflussöffnung (12) in einen Abfluss abgelassen wird, um die Wasserhöhe bei einem vorbestimmten Wert zu halten.

5. Ein System (10) gemäß Anspruch 3, bei dem Wasser durch die Abflussöffnung (12) in einen Abfluss abgelassen wird, um die Wasserhöhe unter dem Maximum zu halten.

6. Ein System (10) gemäß irgend einem der vorherigen Ansprüche, bei dem nachdem die Badewanne bis zu einer vorbestimmten Höhe gefüllt ist, ein Steuersystem (62) erhitztes Wasser automatisch aus dem Rückführungskreislauf in das Bad führt, um die vorbestimmte Wassertemperatur in dem Bad zu halten.

7. Ein System (10) gemäß Anspruch 6, bei dem der Rückführungskreislauf mit einem Wassererhitzer (20) ausgestattet ist.

8. Ein System (10) gemäß irgend einem der vorherigen Ansprüche, enthaltend einen Haupteinlass (18) und einen Zusatzeinlass (22), wobei zu dem einen, zu dem anderen, oder zu beiden erhitztes Wasser selektiv zugeführt werden kann.

9. Ein System (10) gemäß Anspruch 8, bei dem der Haupteinlass (18) einen oder mehrere getrennte Fülleinlässe, einen kombinierten Fülleinlass/Wasserauslass (18/12) und einen kombinierten Fülleinlass/Überlaufauslass (18/30) enthält.

10. Ein System gemäß Anspruch 8 oder 9, wobei des Zusatzeinlass (22) einen oder mehrere Teile ausgewählt aus Duschkopf, Wasserdüse oder andere Einlässe aufweist.

11. Ein System gemäß irgend einem der vorherigen Ansprüche, das so programmiert ist, dass die Badewanne (12) zu einer vorbestimmten Zeit gefüllt wird.

12. Ein System gemäß irgend einem der vorherigen Ansprüche, das durch eine lokale Steuerung programmierbar ist.

13. Ein System gemäß irgend einem der vorherigen Ansprüche, das durch eine Fernsteuerung programmierbar ist.

14. Eine Überlaufarmatur (30) für Badewanne, enthaltend einen ersten Einlass (18), der bei Gebrauch mit einer externen Wasserversorgung verbunden ist und dieses Wasser in eine in Verwendung befindliche Badewanne (14) führt, wobei die Überlaufarmatur einen weiteren Einlass aufweist, der bei Gebrauch mit einem Rückführungskreislauf verbunden ist und Wasser aus dem Rückführungskreislauf in die Badewanne führt.

## Revendications

1. Système (10) pour remplir automatiquement une baignoire (14), le système étant aménagé en service pour acheminer de l'eau chauffée à la baignoire et évacuer l'eau de la baignoire par une sortie de décharge (12) après usage, le système comprenant une conduite de remise en circulation, à travers laquelle de l'eau provenant de la sortie d'évacuation est remise en circulation vers la baignoire en service, dans lequel la conduite de remise en circulation est raccordée à une entrée de remplissage (18), qui est combinée à une sortie de trop-plein (30) pour la baignoire ou formée en goulotte montée sur une paroi adjacente ou une zone de plafond, **caractérisé en ce qu'**une alimentation en eau externe (50, 54, 56) destinée au remplissage du bain est raccordée à l'entrée de remplissage (18).

2. Système (10) selon la revendications 1 aménagé en service pour remplir la baignoire (14) sur une profondeur prédéterminée.

3. Système (10) selon la revendication 1, dans lequel, pour maintenir l'eau à une température prédéterminée, on aménage un système de commande (62) pour ajouter automatiquement de l'eau chauffée au bain depuis l'alimentation en eau externe (50, 54, 56).

4. Système (10) selon la revendication 3, dans lequel de l'eau est libérée par la sortie de décharge (12) vers un égout pour maintenir la profondeur de l'eau à un niveau prédéterminé.

5. Système (10) selon la revendication 3, dans lequel de l'eau est libérée par la sortie de décharge (12) vers un égout de manière à maintenir la profondeur de l'eau en dessous d'un niveau maximal.

6. Système (10) selon l'une quelconque des revendications précédentes, dans lequel, après avoir rempli la baignoire à la profondeur prédéterminée, pour maintenir la température prédéterminée de l'eau dans le bain, on aménage un système de commande (62) pour ajouter automatiquement de l'eau chauffée au bain via la conduite de remise en circulation.

7. Système (10) selon la revendication 6, dans lequel la conduite de remise en circulation est pourvue d'un chauffe-eau (20).

8. Système (10) selon l'une quelconque des revendications précédentes, comprenant une entrée principale (18) et une entrée auxiliaire (22), à l'une et/ou l'autre entrée desquelles l'eau chauffée peut être acheminée de manière sélective.

9. Système (10) selon la revendication 8, dans lequel l'entrée principale (18) comprend une entrée de remplissage séparée, une combinaison d'une entrée de remplissage et d'une sortie de décharge (81/12) et une combinaison d'une entrée de remplissage et d'une sortie de trop-plein (18/30) en un ou plusieurs exemplaires.

10. Système selon la revendication 8 ou 9, dans lequel l'entrée auxiliaire (22) comprend une pomme de douche, des jets pour le corps ou une autre entrée en un ou plusieurs exemplaires.

11. Système (10) selon l'une quelconque des revendications précédentes, qui peut être programmé pour remplir la baignoire (12) à un moment prédéterminé.

12. Système (10) selon l'une quelconque des revendications précédentes, qui peut être programmé par une commande locale.

13. Système (10) selon l'une quelconque des revendications précédentes, qui peut être programmé à distance.

14. Raccord de trop-plein pour baignoire (30) comprenant une première entrée (18) raccordée en service à une alimentation externe d'eau de remplissage et acheminant cette eau de remplissage dans une baignoire (14) en service, le raccord de trop-plein comprenant une autre entrée raccordée en service à une conduite de remise en circulation et acheminant l'eau de la conduite de remise en circulation à la baignoire.
